# EUROPEAN PATENT APPLICATION

(11) **EP 1 545 110 A1**
(43) Date of publication of application: **22.06.2005**
(21) Application number: 03798476.2
(22) Date of filing: 25.09.2003
(51) Int. Cl.: H04M 3/56, H04M 3/42, H04N 7/15

(54) **TELEPHONE INTERPRETATION SYSTEM**

(30) Priority: 27.09.2002 JP 2002282881
(71) Applicant: Ginganet Corporation, Osaka-shi, Osaka 556-0017 (JP)
(72) Inventor: SAHASHI, Nozomu, Osaka 596-0045 (JP)
(74) Representative: Schoppe, Fritz, Dipl.-Ing.
(86) International application number: PCT/JP2003/012192
(87) International publication number: WO 2004/030329

(57) **Abstract**

A telephone interpretation system and a telephone interpretation method for quick and precise interpretation in which the speech of the speaker and the comprehension of the interpretation by the opponent party are not disturbed even when an interpreter performs simultaneous interpretation, while a caller or a callee is speaking is provided.

In the telephone interpretation system (100), a control unit (110) accepts a call from a caller terminal (10), references an interpreter registration table (112) to extract the terminal number of an interpreter who can interpret between the language of the caller and the language of the callee, and connects the caller terminal (10), the callee terminal (20), and the interpreter terminal (30). The telephone interpretation system also has the function of conducting voice communications necessary for interpretation among the terminals. The voice of the interpreter is transmitted by a switch (168) to either the caller or the callee who is designated from the interpreter terminal. The voice of the other party of conversation is suppressed or shut off when the voice of the interpreter is detected by a voice synthesis unit (124, 144). Consequently, it is possible to provide quick and precise interpretation services.

## Description

### TECHNICAL FIELD

The invention relates to a telephone interpretation system for providing interpretation services when persons who speak different languages hold telephone conversation. In particular, the invention relates to a telephone interpretation system capable of providing foreigners who speak different languages with public services such as those from administrative institutions, the police, and hospitals without resident interpreters.

### BACKGROUND ART

Conventionally, when persons who speak different languages hold telephone conversation, interpretation services are provided by using a three-party telephone call service. More specifically, the caller calls a company that provides interpretation services, and tells the reception person about the language and the telephone number of the callee. Then, an interpreter for interpreting the language of the caller and the language of the callee is selected, and the selected interpreter calls the callee while maintaining the connection with the caller. Consequently, the telephone of the caller and the telephone of the callee are connected via the telephone of the interpreter in a three-party call fashion, which allows conversation among the three. The interpreter listens to and interprets the speech of the caller into the language of the callee, and listens to and interprets the speech of the callee into the language of the caller, whereby the caller and the callee can hold telephone conversion through the interpreter.

In the conventional telephone interpretation system using such a three-party call, however, the caller or callee who is speaking might be interrupted since he/she hears the voice of the interpreter when the interpreter conducts simultaneous interpretation of the speech of the speaker. The other party might have difficulty in understanding the words since he/she hears the voice of the speaker and the voice of the interpreter which overlap each other. For this reason, in the conventional interpretation services using a three-party call, the interpreter awaits the completion of the speech of the caller before interpretation. The callee awaits the completion of the interpretation before speech. The interpreter then awaits the completion of the speech of the callee before interpretation. Since such a procedure must be repeated, there has been the problem that it is difficult to provide quick and precise interpretation services.

The same holds for situations where interpretation services are provided by using a telephone conference service. To be more specific, when the telephone conference service is used, the telephone of the caller, the telephone of the callee, and the telephone of the interpreter establish respective connections to a multipoint connection unit. Here, the multipoint connection unit synthesizes the voice of the caller, the voice of the callee, and the voice of the interpreter, and transmits the resultant to each of the telephones. Thus, the caller or callee who is speaking might be interrupted since he/she hears the voice of the interpreter when the interpreter conducts simultaneous interpretation of the speech of the speaker. The other party might have difficulty in understanding the words since he/she hears the voice of the speaker and the voice of the interpreter which overlap each other.

It is thus a chief object of the invention to provide a telephone interpretation system and a telephone interpretation method capable of quick and precise interpretation in which an interpreter or interpreters can conduct simultaneous interpretation even while the caller or callee is speaking, without interrupting the speech of the speaker or hindering the other party from understanding the interpretation.

### DISCLOSURE OF THE INVENTION

A telephone interpretation system according to claim 1 is one for interpreting a call between a caller and a callee who speak different languages through an interpreter. The telephone interpretation system comprises connecting means for connecting a caller terminal, a callee terminal, and an interpreter terminal, and communication means for conducting voice communications among the terminals connected by the connecting means. The communication means has a first voice transmission function of synthesizing a voice from the callee terminal and a voice from the interpreter terminal and transmitting the resultant to the caller terminal, a second voice transmission function of synthesizing a voice from the caller terminal and the voice from the interpreter terminal and transmitting the resultant to the callee terminal, and a third voice transmission function of synthesizing the voice from the caller terminal and the voice from the callee terminal and transmitting the resultant to the interpreter terminal. The telephone interpretation system further has an unnecessary side voice suppressing function of suppressing an unnecessary voice, either the voice from the interpreter terminal to be supplied to the first voice transmission function or the voice from the interpreter terminal to be supplied to the second voice transmission function, by a command from the interpreter terminal. The first voice transmission function has a callee voice suppressing function of suppressing the voice from the callee terminal when the voice from the interpreter terminal is detected. The second voice transmission function has a caller voice suppressing function of suppressing the voice from the caller terminal when the voice from the interpreter terminal is detected.

According to the present invention, the unnecessary side voice suppressing function suppresses the transmission of the voice of the interpreter to an unnecessary side, either the caller or the callee, by the command from the interpreter terminal. In addition, the transmission of the voice of the callee to the caller in the original language is suppressed when the voice of the interpreter is detected by the callee voice suppressing function. The transmission of the voice of the caller to the callee in the original language is suppressed when the voice of the interpreter is detected by the caller voice suppressing function. Consequently, the caller and the callee can grasp the details of the interpretation even when the speech of the interpreter overlaps. This makes it possible to provide quick and precise telephone interpretation services.

Incidentally, the suppression covers both the cases where the voice signal is turned down to some audible level and where it is shut off completely. The unnecessary side voice suppressing function also applies to the case where the voice of the interpreter is switched and transmitted to either one of the caller and the callee.

A telephone interpretation system according to claim 2 is one for interpreting a call between a caller and a callee who speak different languages through an interpreter. The telephone interpretation system comprises connecting means for connecting a caller terminal, a callee terminal, and an interpreter terminal, and communication means for conducting voice communications among the terminals connected by the connecting means. The communication means has a first voice transmission function of switching between a voice from the callee terminal and a voice from the interpreter terminal and transmitting the resultant to the caller terminal, a second voice transmission function of switching a voice from the caller terminal and the voice from the interpreter terminal and transmitting the resultant to the callee terminal, and a third voice transmission function of synthesizing the voice from the caller terminal and the voice from the callee terminal and transmitting the resultant to the interpreter terminal. The telephone interpretation system further has an unnecessary side voice suppressing function of suppressing an unnecessary voice, either the voice from the interpreter terminal to be supplied to the first voice transmission function or the voice from the interpreter terminal to be supplied to the second voice transmission function, by a command from the interpreter terminal. The first voice transmission function has a function of intercepting the voice from the callee terminal and transmitting the voice from the interpreter terminal when the voice from the interpreter terminal is detected. The second voice transmission function has a function of intercepting the voice from the caller terminal and transmitting the voice from the interpreter terminal when the voice from the interpreter terminal is detected.

According to the present invention, the unnecessary side voice suppressing function suppresses the transmission of the voice of the interpreter to an unnecessary side, either the caller or the callee, by the command from the interpreter terminal. In addition, the voice of the callee in the original language is switched to the voice of the interpreter when the voice of the interpreter is detected by the first voice transmission function. The voice of the caller in the original language is switched to the voice of the interpreter when the voice of the interpreter is detected by the second voice transmission function. Consequently, the caller and the callee can grasp the details of the interpretation even when the speech of the interpreter overlaps. This makes it possible to provide quick and precise telephone interpretation services.

The unnecessary side voice suppressing function also applies to the case where the voice of the interpreter is switched and transmitted to either one of the caller and the callee.

A telephone interpretation system according to claim 3 is one for interpreting a call between a caller and a callee who speak different languages through an interpreter. The telephone interpretation system comprises connecting means for connecting a caller terminal, a callee terminal, and an interpreter terminal, and communication means for conducting voice communications among the terminals connected by the connecting means. The communication means has a first voice transmission function of multiplexing a voice from the callee terminal and a voice from the interpreter terminal and transmitting the resultant to the caller terminal, a second voice transmission function of multiplexing a voice from the caller terminal and the voice from the interpreter terminal and transmitting the resultant to the callee terminal, and a third voice transmission function of multiplexing the voice from the caller terminal and the voice from the callee terminal and transmitting the resultant to the interpreter terminal. The telephone interpretation system further has an unnecessary side voice suppressing function of suppressing an unnecessary voice, either the voice from the interpreter terminal to be supplied to the first voice transmission function or the voice from the interpreter terminal to be supplied to the second voice transmission function, by a command from the interpreter terminal.

According to the present invention, the unnecessary side voice suppressing function suppresses the transmission of the voice of the interpreter to an unnecessary side, either the caller or the callee, by the command from the interpreter terminal. In addition, the voice of the callee in the original language and the voice of the interpreter are multiplexed and transmitted to the caller by the first voice transmission function. The voice of the caller in the original language and the voice of the interpreter are multiplexed and transmitted to the callee by the second voice transmission function. Consequently, even when the speech of the interpreter overlaps, the caller and the callee can grasp the details of the interpretation by selecting and listening to the voice of the interpreter out of the voices received. This makes it possible to provide quick and precise telephone interpretation services.

The unnecessary side voice suppressing function also applies to the case where the voice of the interpreter is switched and transmitted to either one of the caller and the callee.

The telephone interpretation system according to claim 4 is the telephone interpretation system according to any one of claims 1 to 3, wherein the communication means has a function of recording the voice from the caller terminal, the voice from the callee terminal, and the voice from the interpreter terminal; and a function of reproducing and transmitting the recorded voices by request from the terminals.

Consequently, the voices of the caller, the callee, and the interpreter are recorded during interpretation services, and the recorded contents can be checked by request from the terminals. It is therefore possible to check again what was unclear at the scene, and examine the details of the interpretation services later.

For voice recording, the voices to be transmitted to the caller terminal and the voices to be transmitted to the callee terminal may be recorded in a multiplex fashion. Consequently, in terminals having a voice demultiplexing function, the language of the caller and the language of the callee can be separated and checked for the contents.

Alternatively, the voices to be transmitted to the caller terminal and the voices to be transmitted to the callee terminal may be recorded separately so that the voices of a side designated by a command from the terminals is reproduced for transmission. Consequently, even in terminals not having the voice demultiplexing function, the language of the caller and the language of the callee can be checked separately for the contents.

The telephone interpretation system according to claim 5 is the telephone interpretation system according to any one of claims 1 to 4, wherein the connecting means has an interpreter registration table containing at least the language types possible for interpreters to interpret and terminal numbers of the interpreters. The telephone interpretation system has a function of accepting a call from the caller terminal; a function of acquiring a terminal number of the callee, the language type of the callee, and the language type of the caller from the caller terminal of which the call is accepted; a function of extracting the terminal number of an interpreter by referencing the interpreter registration table based on the language type of the callee and the language type of the caller acquired; a function of calling the interpreter terminal by using the acquired terminal number of the interpreter; and a function of calling the callee terminal by using the acquired terminal number of the callee.

Consequently, based on a call from the caller terminal, the terminal number of an interpreter who can interpret between the language of the caller and the language of the callee is extracted from the interpreter registration table. Then, the caller terminal, the callee terminal, and the interpreter terminal are connected automatically before voice communications necessary for interpretation are conducted. Since the caller need not look for an interpreter nor negotiate with the callee in advance, it is possible to provide telephone interpretation services capable of emergency response. Besides, interpreters can serve from anywhere as long as they can be called. The binding hours of the interpreters can thus be minimized to reduce the cost of the interpretation services.

A telephone interpretation system according to claim 6 is one for interpreting a call between a caller and callee who speak different languages through a first interpreter who interprets the language of the callee into the language of the caller and a second interpreter who interprets the language of the caller into the language of the callee. The telephone interpretation system comprises connecting means for connecting a caller terminal, a callee terminal, a first interpreter terminal, and a second interpreter terminal, and communication means for conducting voice communications among the terminals connected by the connecting means. The communication means has a first voice transmission function of synthesizing a voice from the callee terminal and a voice from the first interpreter terminal and transmitting the resultant to the caller terminal, a second voice transmission function of synthesizing a voice from the caller terminal and the voice from the second interpreter terminal and transmitting the resultant to the callee terminal, a third voice transmission function of transmitting at least the voice from the callee terminal to the first interpreter terminal, and a fourth voice transmission function of transmitting at least the voice from the caller terminal to the second interpreter terminal. The first voice transmission function has a callee voice suppressing function of suppressing the voice from the callee terminal when the voice from the first interpreter terminal is detected. The second voice transmission function has a caller voice suppressing function of suppressing the voice from the caller terminal when the voice from the second interpreter terminal is detected.

According to the present invention, the transmission of the voice of the callee in the original language to the caller is suppressed when the voice of the first interpreter is detected by the callee voice suppressing function. The transmission of the voice of the caller in the original language to the callee is suppressed when the voice of the second interpreter is detected by the caller voice suppressing function. Consequently, the caller and the callee can grasp the details of the interpretation even when the speeches of the respective interpreters overlap. This makes it possible to provide quick and precise telephone interpretation services.

Incidentally, the suppression covers both the cases where the voice signal is turned down to some audible level and where it is shut off completely.

A telephone interpretation system according to claim 7 is one for interpreting a call between a caller and callee who speak different languages through a first interpreter who interprets the language of the callee into the language of the caller and a second interpreter who interprets the language of the caller into the language of the callee. The telephone interpretation system comprises connecting means for connecting a caller terminal, a callee terminal, a first interpreter terminal, and a second interpreter terminal, and communication means for conducting voice communications among the terminals connected by the connecting means. The communication means has a first voice transmission function of switching between a voice from the callee terminal and a voice from the first interpreter terminal and transmitting the resultant to the caller terminal, a second voice transmission function of switching between a voice from the caller terminal and a voice from the second interpreter terminal and transmitting the resultant to the callee terminal, a third voice transmission function of transmitting at least the voice from the callee terminal to the first interpreter terminal, and a fourth voice transmission function of transmitting at least the voice from the caller terminal to the second interpreter terminal. The first voice transmission function has a function of interrupting the voice from the callee terminal and transmitting the voice from the first interpreter terminal when the voice from the first interpreter terminal is detected. The second voice transmission function has a function of interrupting the voice from the caller terminal and transmitting the voice from the second interpreter terminal when the voice from the second interpreter terminal is detected.

According to the present invention, the voice of the callee in the original language is switched to the voice of the first interpreter when the voice of the first interpreter is detected by the first voice transmission function. The voice of the caller in the original language is switched to the voice of the second interpreter when the voice of the second interpreter is detected by the second voice transmission function. Consequently, the caller and the callee can grasp the details of the interpretation even when the speeches of the respective interpreters overlap. This makes it possible to provide quick and precise telephone interpretation services.

A telephone interpretation system according to claim 8 is one for interpreting a call between a caller and callee who speak different languages through a first interpreter who interprets the language of the callee into the language of the caller and a second interpreter who interprets the language of the caller into the language of the callee. The telephone interpretation system comprises: connecting means for connecting a caller terminal, a callee terminal, a first interpreter terminal, and a second interpreter terminal; and communication means for conducting voice communications among the terminals connected by the connecting means. The communication means has a first voice transmission function of multiplexing a voice from the callee terminal and a voice from the first interpreter terminal and transmitting the resultant to the caller terminal, a second voice transmission function of multiplexing a voice from the caller terminal and a voice from the second interpreter terminal and transmitting the resultant to the callee terminal, a third voice transmission function of transmitting at least the voice from the callee terminal to the first interpreter terminal, and a fourth voice transmission function of transmitting at least the voice from the caller terminal to the second interpreter terminal.

According to the present invention, the voice of the callee in the original language and the voice of the first interpreter are multiplexed and transmitted to the caller by the first voice transmission function. The voice of the caller in the original language and the voice of the second interpreter are multiplexed and transmitted to the callee by the second voice transmission function. Consequently, even when the speeches of the respective interpreters overlap, the caller and the callee can grasp the details of the interpretation by selecting and listening to the voices of the interpreters out of the voices received. This makes it possible to provide quick and precise telephone interpretation services.

The telephone interpretation system according to claim 9 is the telephone interpretation system according to any one of claims 6 to 8, wherein the communication means has a function of recording the voice from the caller terminal, the voice from the callee terminal, the voice from the first interpreter terminal, and the voice from the second interpreter terminal; and a function of reproducing and transmitting the recorded voices by request from the terminals.

Consequently, the voices of the caller, the callee, the first interpreter, and the second interpreter are recorded during interpretation services, and the recorded contents can be checked by request from the terminals. It is therefore possible to check again what was unclear at the scene, and examine the details of the interpretation services later.

For voice recording, the voices to be transmitted to the caller terminal and the voices to be transmitted to the callee terminal may be recorded in a multiplex fashion. Consequently, in terminals having a voice demultiplexing function, the language of the caller and the language of the callee can be checked separately for the contents.

Alternatively, the voices to be transmitted to the caller terminal and the voices to be transmitted to the callee terminal may be recorded separately so that the voices of a side designated by a command from the terminals is reproduced for transmission. Consequently, even in terminals not having the voice demultiplexing function, the language of the caller and the language of the callee can be checked separately for the contents.

The telephone interpretation system according to claim 10 is the telephone interpretation system according to any one of claims 6 to 9, wherein the connecting means has an interpreter registration table containing at least the language types possible for interpreters to interpret and terminal numbers of the interpreters. The telephone interpretation system further has a function of accepting a call from the caller terminal; a function of acquiring a terminal number of the callee, the language type of the callee, and the language type of the caller from the caller terminal of which the call is accepted; a function of extracting the terminal number of the first interpreter by referencing the interpreter registration table based on the language type of the callee and the language type of the caller acquired; a function of calling the first interpreter terminal by using the acquired terminal number of the first interpreter; a function of extracting the terminal number of the second interpreter by referencing the interpreter registration table based on the language type of the caller and the language type of the callee acquired; a function of calling the second interpreter terminal by using the acquired terminal number of the second interpreter; and a function of calling the callee terminal by using the acquired terminal number of the callee.

Consequently, based on a call from the caller terminal, the terminal numbers of the first interpreter who interprets the language of the callee into the language of the caller and the second interpreter who interprets the language of the caller into the language of the callee are extracted from the interpreter registration table. Then, the caller terminal, the callee terminal, the first interpreter terminal, and the second interpreter terminal are connected automatically before voice communications necessary for interpretation are conducted. Since the caller need not look for interpreters nor negotiate with the callee in advance, it is possible to provide telephone interpretation services capable of emergency response. Besides, the interpreters can serve from anywhere as long as they can be called. The binding hours of the interpreters can thus be minimized to reduce the cost of the interpretation services.

The telephone interpretation system according to claim 11 is the telephone interpretation system according to claim 5 or 10, wherein the interpreter registration table contains selection information for selecting interpreters; and the connecting means has a function of acquiring an interpreter selection condition from the caller terminal; and a function of retrieving the terminal number(s) of an appropriate interpreter(s) by referencing the interpreter registration table based on the interpreter selection condition acquired.

This makes it possible to select an interpreter or interpreters suited to the purpose of the conversation between the caller and the callee, out of those who are registered in the interpreter registration table. The selection information for selecting interpreters include information on gender, age, residence, the fields of specialization, qualifications, etc.

If the interpreter registration table contains the language-specific interpretation levels of the interpreters, users can select interpreters of levels desirable for interpretation between intended languages. Meanwhile, the interpreters can register for a number of languages they speak. This allows flexible, efficient selection of interpreters.

For the telephone interpretation system with bidirectional simultaneous interpretation, the levels of listening comprehension and those of speaking abilities may be registered separately as the language-specific interpretation levels in the interpreter registration table. This makes it possible to select persons the most suitable for the first interpreter and the second interpreter individually, allowing more flexible efficient selection of interpreters.

The telephone interpretation system according to claim 12 is the telephone interpretation system according to any one of claims 5, 10, and 11, wherein: the interpreter registration table contains availability flags for indicating whether or not the interpreters are available; and the connecting means has a function of extracting the terminal number(s) of an available interpreter(s) by referencing the availability flags in the interpreter registration table.

The interpreters can thus register their availabilities into the interpreter registration table so that available interpreters are automatically selected and called. This can preclude needless calls, and provide more flexible efficient telephone interpretation services.

The telephone interpretation system according to claim 13 is the telephone interpretation system according to any one of claims 5, 10, 11, and 12, wherein: the interpreter registration table contains accounting information on the interpreters; and the connecting means has a function of measuring the time for the caller terminal or callee terminal to receive interpretation services, and a function of calculating fees from the measured time and the accounting information registered in the interpreter registration table.

Since the interpreter registration table contains the accounting information on the interpreters, it is possible to charge correct fees for the telephone interpretation services.

Here, the interpreter registration table may contain the language-specific interpretation levels of the interpreters so that the accounting information is obtained by using an accounting table which is provided separately and defines the relationship between the interpretation levels and hourly rates. Consequently, it is possible to charge correct fees in accordance with the levels of the interpreters.

The above object, other objects, features, and advantages of the invention will become more apparent from the following detailed description of embodiments of the invention made in conjunction with the drawings.

### BRIEF DESCRIPTION OF THE DRAWINGS

Fig. 1 is a system block diagram showing a telephone interpretation system according to a first embodiment of the present invention;
Fig. 2 is a chart showing an example of an interpreter registration table in the telephone interpretation system according to the first embodiment of the present invention;
Fig. 3 is a process flowchart showing the connection processing by a control unit in the telephone interpretation system according to the first embodiment of the present invention;
Fig. 4 is a system block diagram showing the telephone interpretation system according to a second embodiment of the present invention;
Fig. 5 is a chart showing an example of the interpreter registration table in the telephone interpretation system according to the second embodiment of the present invention;
Fig. 6 is a process flowchart showing the connection processing by the control unit in the telephone interpretation system according to the second embodiment of the present invention;
Fig. 7 is a block diagram showing a practical example of a voice communication function in the telephone interpretation system according to the first embodiment of the present invention;
Fig. 8 is a block diagram showing another practical example of the voice communication function in the telephone interpretation system according to the first embodiment of the present invention;
Fig. 9 is a block diagram showing a practical example of the voice communication function in the telephone interpretation system according to the second embodiment of the present invention;
Fig. 10 is a block diagram showing another practical example of the voice communication function in the telephone interpretation system according to the second embodiment of the present invention;
Fig. 11 is a block diagram showing a practical example of a recording and reproducing function in the telephone interpretation system according to the first embodiment of the present invention; and
Fig. 12 is a block diagram showing a practical example of the recording and reproducing function in the telephone interpretation system according to the second embodiment of the present invention.

### BEST MODE FOR CARRYING OUT THE INVENTION

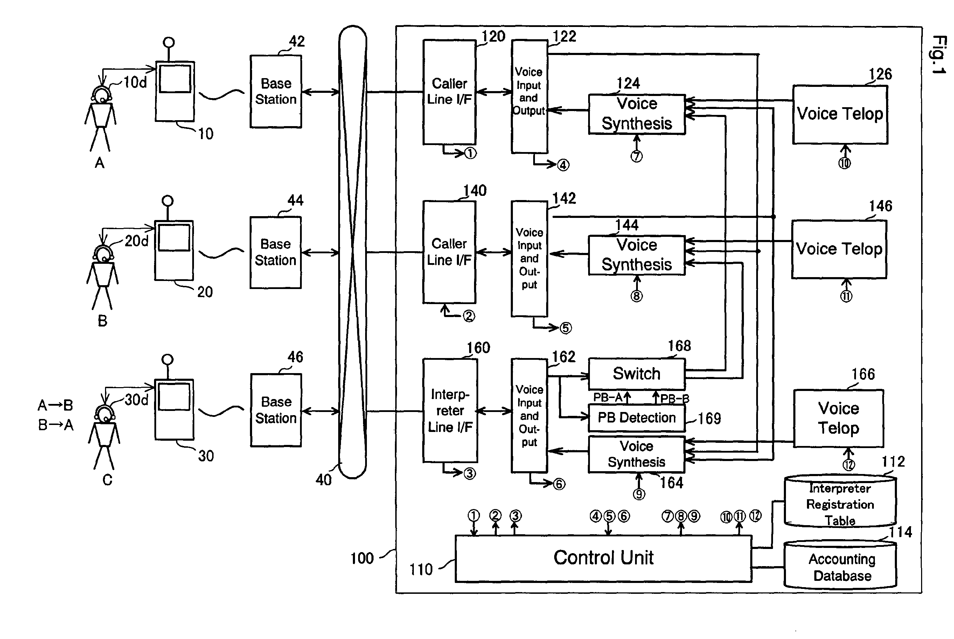

Fig. 1 is a system block diagram showing a telephone interpretation system according to an embodiment of the present invention. In the diagram, the reference numeral 100 designates the telephone interpretation system which is installed in an interpretation center for providing interpretation services. The telephone interpretation system 100 connects a telephone terminal 10 to be used by a caller (hereinafter, referred to as caller terminal), a telephone terminal 20 to be used by a callee (hereinafter, referred to as callee terminal), and a telephone terminal 30 to be used by an interpreter (hereinafter, referred to as interpreter terminal) via public telephone lines 40, thus provides telephone interpretation services by having the interpreter interpret a telephone conversation between the caller and the callee by telephone.

The following description will deal with the case where the caller terminal 10, the callee terminal 20, and the interpreter terminal 30 use cellular phones with head sets 10d, 20d, and 30d for inputting and outputting voices plugged into respective voice input jacks. It is possible, however, to use ordinary fixed phones. Voices may also be input and output directly by using ordinary handsets.

The telephone interpretation system 100 comprises a caller terminal line interface (hereinafter, "interface" will be abbreviated as I/F) 120, a callee terminal line I/F 140, and an interpreter terminal line I/F 160 for establishing connection with the caller terminal, the callee terminal, and the interpreter terminal, respectively. The line I/Fs are connected with voice input and output units 122, 142, and 162 for inputting and outputting voices to/from the respective terminals.

The voice input of the caller terminal voice input and output unit 122 is connected with a voice synthesis unit 124 which synthesizes the voice output of the callee terminal voice input and output unit 142, the voice output of the interpreter terminal voice input and output unit 162, and the voice output of a caller terminal voice telop memory 126. The voice input of the callee terminal voice input and output unit 142 is connected with a voice synthesis unit 144 which synthesizes the voice output of the caller terminal voice input and output unit 122, the voice output of the interpreter terminal voice input and output unit 162, and the voice output of a callee terminal voice telop memory 146.

The voice input of the interpreter terminal voice input and output unit 162 is connected with a voice synthesis unit 164 which synthesizes the voice output of the caller terminal voice input and output unit 122, the voice output of the callee terminal voice input and output unit 142, and the voice output of an interpreter terminal voice telop memory 166.

Here, the voice output of the interpreter terminal voice input and output unit 162 is input to a switch 168. A PB detector 169 detects a command from the interpreter terminal. When the interpreter interprets the language of the callee into the language of the caller, the voice output is supplied to the caller terminal voice synthesis unit 124. When the interpreter interprets the language of the caller into the language of the callee, the voice output is supplied to the callee terminal voice synthesis unit 144. Consequently, the voice of the interpreter is transmitted to either one of the caller and the callee who is in need. This can prevent the speech of the caller or the callee from being interrupted by an unnecessary voice of the interpreter, thereby allowing smooth conversation.

The caller terminal voice synthesis unit 124 has the function of suppressing the voice level of the callee terminal or switching the voice from the callee terminal to the voice from the interpreter terminal when the voice from the interpreter terminal is detected. The callee terminal voice synthesis unit 144 has the function of suppressing the voice level of the caller terminal or switching the voice from the caller terminal to the voice from the interpreter terminal when the voice from the interpreter terminal is detected. This can prevent the interpreting voice of the interpreter from overlapping with the voice of the other party at the caller terminal or callee terminal, thereby avoiding poor audibility. The interpreter can thus conduct simultaneous interpretation of the speeches of the speakers to provide quick and precise interpretation.

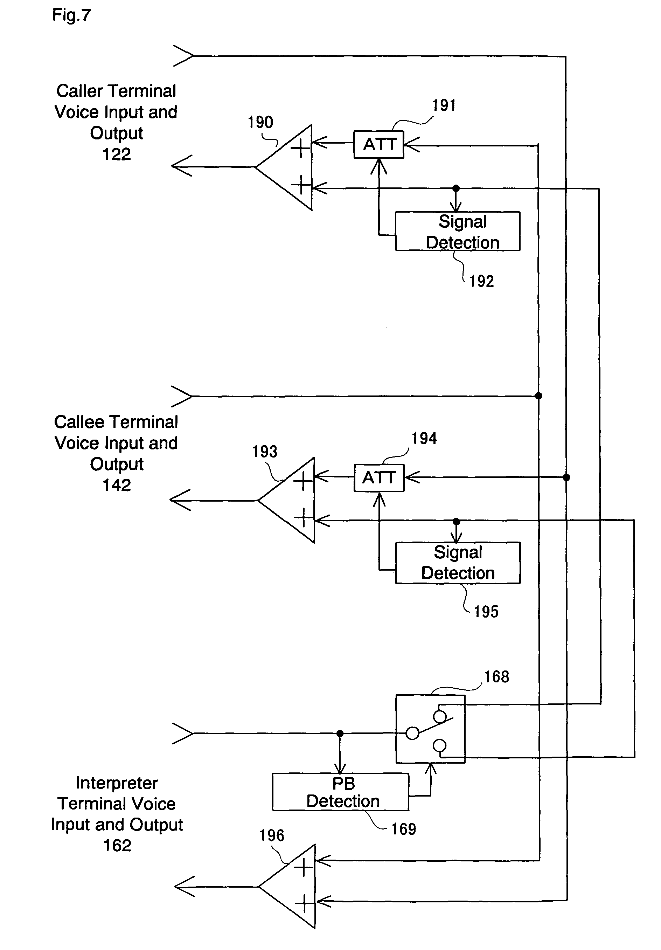

Fig. 7 shows a specific example of the function of switching the destination of the interpreter voice in the switch 168 and the functions of suppressing the caller voice or callee voice in the voice synthesis units 124 and 144. As shown in the diagram, the voice output of the interpreter terminal voice input and output unit 162 is connected to a caller terminal voice signal adder 190 and a callee terminal voice signal adder 193 via the switch 168. The voice of the interpreter is thus supplied to either the caller or the callee depending on the signal from the PB detector 169. From a data signal or tone signal included in the voice from the interpreter terminal, the PB detector 169 detects that a predetermined caller selection number or callee selection number is pressed on a dial pad of the terminal. The PB detector 169 then turns the switch 168 to the designated side. For this purpose, the interpreter designates which side the interpreting voice is targeted for, the caller or the callee, from the dial pad before he/she speaks. Consequently, the voice of the interpreter will not be transmitted to the caller or callee who need not hear the voice of the interpreter.

Now, the caller terminal voice signal adder 190 is also connected with the voice output of the callee terminal voice input and output unit 142 via an attenuator 191. The attenuator 191 attenuates the voice from the callee terminal when the voice of the interpreter is detected by a signal detector 192. The callee terminal voice signal adder 193 is also connected with the voice output of the caller terminal voice input and output unit 122 via an attenuator 194. The attenuator 194 attenuates the voice from the caller terminal when the voice of the interpreter is detected by a signal detector 195. Here, the signal detectors 192 and 195 are set to appropriate detection levels so as to prevent the voices of the other parties from accidental attenuation due to noise or the like.

Incidentally, appropriate signal delay units may be arranged on the interpreter's voice inputs to the voice signal adders 190 and 193. This can make sure that the caller and the callee hear the voice of the interpreter immediately after the voice of the interpreter is detected by the signal detectors 192 and 195.

In the foregoing example, the voices of the other parties are attenuated by the attenuators 191 and 194 so that the caller or callee hears the live voice of the other party at some audible level while listening to the voice of the interpreter. Nevertheless, the voices of the other parties may be shut off completely by using switches.

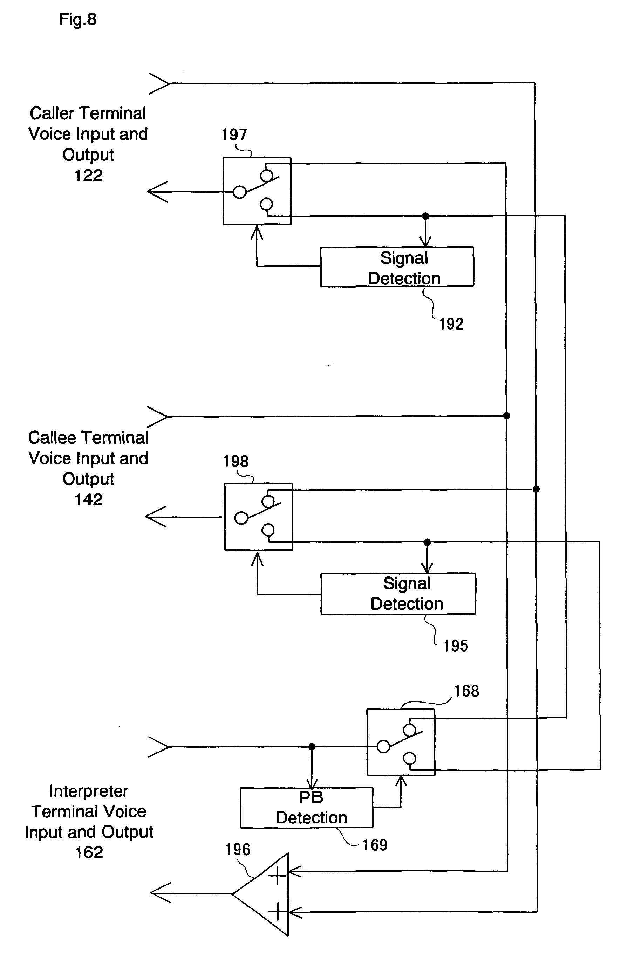

Fig. 8 shows a practical example in which the voices of the other parties are shut off and the voice of the interpreter alone is transmitted when the voice of the interpreter is detected. As shown in the diagram, switches 197 and 198 are used instead of the voice signal adders 190 and 193 described above. When the voice of the interpreter is detected by the signal detectors 192 and 195, the switches 197 and 198 are turned from the voices of the other parties to the voice of the interpreter. In other respects, the configuration is the same as in Fig. 7.

Again, appropriate signal delay units may be arranged on the interpreter's voice inputs to the switches 197 and 198 so as to make sure that the caller and the callee hear the voice of the interpreter immediately after the voice of the interpreter is detected by the signal detectors 192 and 195.

The foregoing example has dealt with the case where the voice signal adders 190 and 193 each add the voice of the interpreter and the voice of the other party simply. Nevertheless, the two signals may be multiplexed. For example, if the terminals are stereo-sound compatible, the voice of the other party and the voice of the interpreter are stereophonically synthesized and transmitted as a left channel and a right channel, respectively. Necessary voices are then selected by the receiving parties on the terminal sides. In this case, the telephone interpretation system need not be provided with the attenuators for attenuating the voices of the other parties. The receiving parties can adjust the loudness levels of the right and left channels across the headsets separately depending on the circumstances.

The foregoing examples have dealt with the cases where the switch 168 is used to switch the destination of the voice of the interpreter between the caller and the callee. Nevertheless, the voice of the interpreter may be supplied to both the voice signal adder 190 (or switch 197) and the voice signal adder 193 (or switch 198) through respective attenuators so that the voice signal to the unnecessary party is attenuated by the PB detector 169. When the attenuators are used thus, the voice of the interpreter is transmitted to the speakers at some level. The speakers can thus speak while checking if their own voices are being interpreted.

The telephone interpretation system 100 includes a control unit 110 having an interpreter registration table 112 into which the terminal numbers of interpreter terminals to be used by interpreters are registered. The control unit 110 is connected with each of the line I/Fs 120, 140, and 160, the voice input and output units 122, 142, and 162, the voice synthesis units 124, 144, and 164, and the telop memories 126, 146, and 166. The control unit 110 provides functions for connecting the caller terminal, the callee terminal, and the interpreter terminal. The functions include: accepting a call from the caller terminal; acquiring the language type of the caller and the language type of the callee; acquiring an interpreter selection condition; extracting the terminal number of the interpreter by referencing the interpreter registration table 112 based on the language types and the selection condition acquired; calling the interpreter terminal by using the terminal number extracted; acquiring the terminal number of the callee; and calling the callee terminal by using the terminal number acquired.

The inputs of the voice synthesis units 124, 144, and 164 are connected with the caller terminal voice telop memory 126, the callee terminal voice telop memory 146, and the interpreter terminal voice telop memory 166, respectively. The contents of the voice telop memories 126, 146, and 166 can be set by the control unit 110. Consequently, when holding a telephone conversation through an interpreter, it is possible to transmit necessary voice messages to the individual terminals and establish a three-party call by setting the voice telop memories 126, 146, and 166 with messages for the respective terminals, and issuing commands to select the signals of the voice telop memories 126, 146, and 166 to the respective voice synthesis units 124, 144, and 164.

Next, description will be given of the connection processing by the control unit 110 for holding a telephone conversation through an interpreter.

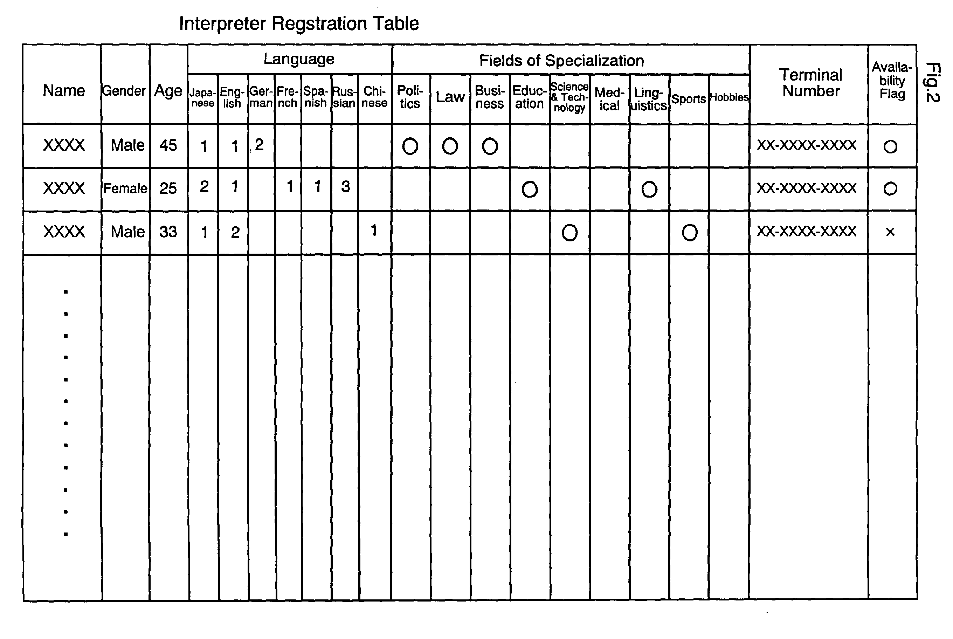

Prior to the processing, interpreter selection information and the terminal numbers of the terminals to be used by respective interpreters are registered into the interpreter registration table 112 of the control unit 110 from an appropriate terminal (not shown). Fig. 2 shows examples of entry items to be registered into the interpreter registration table 112. The interpreter selection information is information for selecting interpreters desired by users, and includes such entries as gender, age, language capabilities, residence, and the fields of specialization. For language capabilities, the language-specific levels of the interpreters are registered so that the users can select interpreters of desired levels in both intended languages. Here, the advanced, intermediate, and primary levels of interpretation are expressed as 1, 2, and 3, respectively. The entries on the residence are made on the assumption that some users may desire persons who have geographic knowledge on certain areas. Zip code is used here for area specification. The entries on the fields of specialization are made on the assumption that some users may desire persons who have specialized knowledge on a field or are well informed in topics of the field when the conversation will deal with the field of specialization. Here, the specialized fields of the interpreters can be registered in such subsections as politics, law, business, education, science and technology, medical, linguistics, sports, and hobbies. Since the fields of specialization range widely, hierarchical entries may be made in advance so that the entries are searched into levels desired by users at the time of selection.

Alternatively, qualifications possessed by the individual interpreters may be registered so that interpreters who carry qualifications desired by the users can be selected.

For the terminal numbers, the telephone numbers of the terminals are registered since the target terminals are telephone terminals to be connected to public telephone lines.

The interpreter registration table 112 also contains availability flags for indicating whether the corresponding interpreters are available or not. Registered interpreters can call the interpretation center from their own terminals and input commands from their dial pads to set or reset their availability flags. Consequently, the registered interpreters can avoid unnecessary calls by setting their availability flags in the interpreter registration table only when they are available. The users can also select available interpreters quickly.

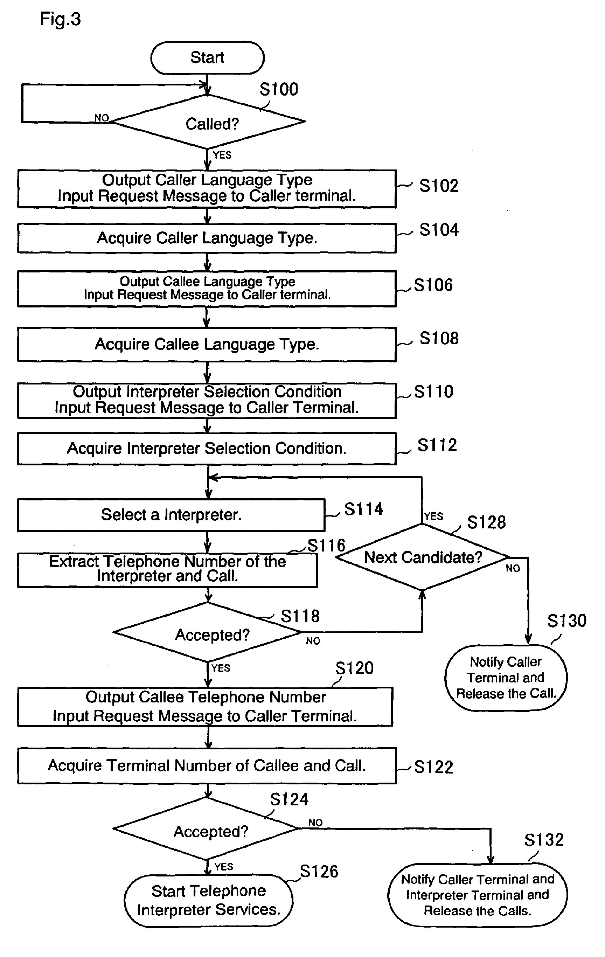

Fig. 3 shows the process flow of the connection processing by the control unit 110. The telephone interpretation system 100 accepts an order for interpretation services when the caller calls the telephone number of the caller terminal line I/F. The telephone interpretation system 100 then calls an interpreter terminal and a callee terminal, and establishes connection for the telephone interpretation services.

As shown in the chart, the presence of a call to the caller terminal line I/F 120 is detected initially (S100). When a call is detected, a message for requesting to input the language type of the caller is output to the caller terminal (S102). This is effected by setting the caller voice telop memory 126 with voice messages such as "If you speak Japanese, please press 1#" (in Japanese), "If you speak English, please press 2#", ... . Subsequent messages to the caller terminal and the interpreter terminal will be given in the acquired language type of the caller. The language type of the caller, input by the caller in response, is acquired thus (S104).

Next, a message for requesting to input the language type of the callee is output to the caller terminal (S106). For example, if the caller is a Japanese, the message is given by setting the callee voice telop memory 126 with voice messages such as "If the language of the callee is English, press 1#. If German, press 2#. ..." (in Japanese). The language type of the callee, input by the caller in response, is acquired thus (S108). As a result, messages to the callee terminal will be given in the acquired language type of the callee.

Now, a message for requesting to input an interpreter selection condition is output to the caller terminal (S110). This is effected by setting the caller voice telop memory 126 with voice messages such as "If a male interpreter is desired, press 1#. If female, press 2#. If do not care, press 0#", "If an interpreter under the age of 20 is desired, press 1#. For 20 to 39, press 2#. For 40 and above, 3#. If do not care, press 0#", "If any area specification is desired, press zip code and #. If not, press 0#", "To specify the fields of specialization, press 1 for politics, 2 for law, 3 for business, 4 for education, 5 for science and technology, ... . Press # in conclusion", and "To specify interpretation level, press 1# for advanced, 2# for intermediate, and 3# for primary. If do not care, press 0#". The interpreter selection condition input by the caller in response is acquired thus (S112).

Next, the interpreter registration table 112 is referred to select an interpreter who has the specified interpretation level in the language of the caller and the language of the callee, matches with the acquired selection condition including gender, age, residence, and/or the fields of specialization, and has his/her availability flag set (S114). Here, registration information on the selected interpreter may be notified via a voice message so that the caller makes a final selection on the interpreter. In addition, the hourly rate (to be described later) of the interpreter, registered in the interpreter registration table 112, may be notified via a voice message. This allows the users to select appropriate interpreters in consideration of the fees necessary for the interpretation services.

Next, the terminal number of the selected interpreter is extracted from the interpreter registration table 112 and called (S116). Here, the interpreter terminal may be notified of personal information on the caller, the language types of the caller and callee, the interpreter selection condition, and the like by using the interpreter terminal voice telop memory 166. Whether or not to accept the request for interpretation can be checked in this way. For example, the personal information on the caller may be member information registered in advance, provided that the interpretation services are offered on a membership basis. When the interpreter terminal has accepted the call (S118), a message for requesting to input the terminal number of the callee is output to the caller terminal (S120). This is effected by setting the caller voice telop memory 126 with a voice message such as "Press the telephone number of the callee and #". The terminal number of the callee, input by the caller in response, is thus acquired and called (S122). Here, the callee terminal may also be notified of the personal information on the caller, the language types of the caller and callee, the interpreter selection condition, and the like by using the callee terminal voice telop memory 146. Whether or not to accept the call, and the presence or absence of errors in the selection condition can be checked in this way.

When the callee terminal has accepted the call (S124), the telephone interpretation services are started (S126).

In case the selected interpreter terminal does not accept the call in S118, whether a next candidate is available is determined (S128). In case a next candidate is available, the processing returns to S114 to repeat. Otherwise the caller terminal is notified as such and the call is released (S130). In case the callee terminal does not accept the call in S124, the caller terminal and the interpreter terminal are notified as such and the calls are released (S134).

The control unit 110 has a timer (not shown) for calculating the fee for interpretation services. The timer measures the time from the beginning of a connection to the disconnection. The interpreter registration table 112 contains entries on the hourly rates of the interpreters (not shown). At the end of interpretation services, the fee is calculated from the time measured by the timer and the hourly rates registered in the interpreter registration table 113. The calculated fee is registered into an accounting database 114, and charged to the user later.

Incidentally, the hourly rates of the interpreters may be determined from the interpretation levels registered in the interpreter registration table 112, by referencing an accounting table provided separately. Here, the accounting table shall define the relationship between the interpretation levels of the interpreters and the hourly rates.

The foregoing embodiment has dealt with the case where if the interpreter terminal selected does not accept the call, an appropriate message is simply posted to the caller before disconnection. Nevertheless, an interpretation reservation table for registering the terminal number of the caller and the terminal number of the callee may be provided so that the caller and the callee can be notified to start the telephone interpretation service when the selected interpreter accepts the call.

The foregoing embodiment has dealt with the case where the caller enters the language type of the caller and the language type of the callee for the sake of selecting an interpreter. Nevertheless, the language type of the caller or callee may be acquired automatically by providing the interpretation center with telephone numbers for respective caller languages or respective combinations of caller languages and callee languages. The foregoing embodiment has also dealt with the case where the caller enters the interpreter selection condition for the sake of selecting an interpreter. Nevertheless, whether or not to specify the interpreter selection condition may be inquired initially. If not to specify, an interpreter may be selected based on the entered language types alone.

Moreover, in emergency situations, an interpreter in charge of emergency response may be called automatically by the caller pressing certain dial numbers initially.

The foregoing embodiment has dealt with the case where the telephone interpretation system 100 is composed of the line I/Fs, the voice input and output units, the voice synthesis units, the control unit, and so on. Nevertheless, these components need not necessarily be configured as separate pieces of hardware. The functions of the units may be achieved in the form of software processing by using a computer.

The foregoing embodiment has dealt with the case where the interpreter terminal 30 is located outside the interpretation center as the caller terminal 10 and the callee terminal 20 are, and provides interpretation services when called from the interpretation center via the public telephone lines. However, the present invention is not limited thereto. It is understood that some or all of interpreter terminals may be installed in the interpretation center so that interpretation services are provided from the interpretation center.

Incidentally, in the foregoing embodiment, the interpreters can participate interpretation services from anywhere as long as they have terminals capable of connection with public telephone lines. The interpreters can thus make effective use of their unoccupied hours to provide interpretation services by using the availability flags mentioned above. This allows efficient and stable operation of interpretation services which often have difficulty in securing necessary personnel.

The foregoing embodiment has dealt with the case where an interpreter is in charge of both interpreting the language of the caller into the language of the callee and interpreting the language of the callee into the language of the caller. Nevertheless, a first interpreter for interpreting the language of the callee into the language of the caller and a second interpreter for interpreting the language of the caller into the language of the callee may be selected individually to perform bidirectional simultaneous interpretation.

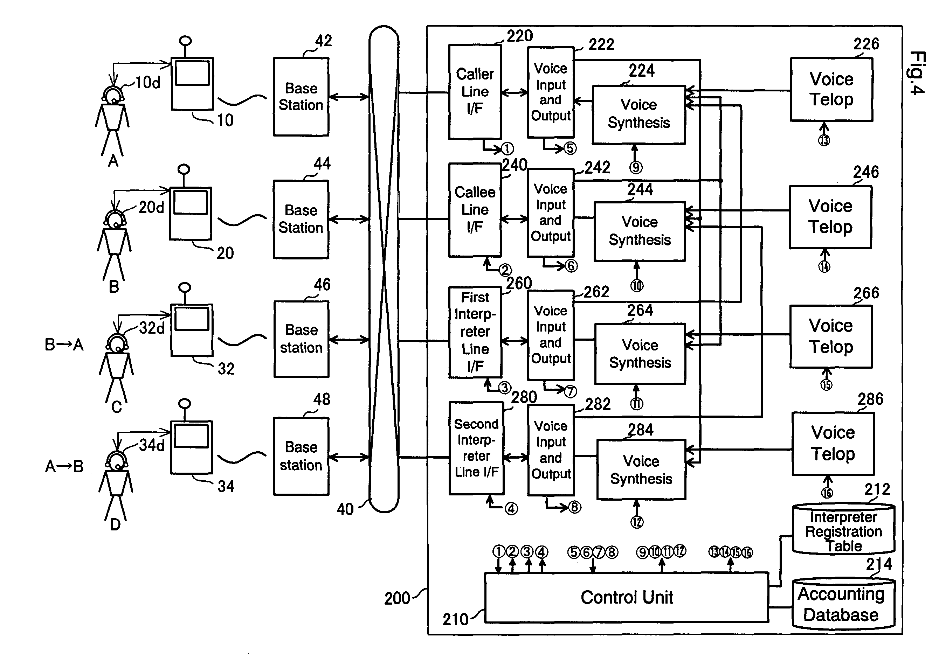

Fig. 4 shows an example of the system configuration of the telephone interpretation system according to a second embodiment of the present invention for providing bidirectional simultaneous interpretation services. In the diagram, the reference numeral 200 designates the telephone interpretation system which is installed in an interpretation center for providing bidirectional simultaneous interpretation services. The telephone interpretation system 200 connects a telephone terminal 10 to be used by a caller (hereinafter, referred to as caller terminal), a telephone terminal 20 to be used by a callee (hereinafter, referred to as callee terminal), a telephone terminal 32 to be used by a first interpreter (hereinafter, referred to as first interpreter terminal), and a telephone terminal 34 to be used by a second interpreter (hereinafter, referred to as second interpreter terminal) through public telephone lines 40. The telephone interpretation system 200 provides telephone interpretation services by having the first and second interpreters interpret a telephone conversation between the caller and the callee by telephone.

The telephone interpretation system 200 has a caller terminal line I/F 220, a callee terminal line I/F 240, a first interpreter terminal line I/F 260, and a second interpreter line I/F 280. The line I/Fs are connected with voice input and output units 222, 242, 262, and 282 for inputting and outputting voices to/from the respective terminals.

The voice input of the caller terminal voice input and output unit 222 is connected with a voice synthesis unit 224 which synthesizes the voice output of the callee terminal voice input and output unit 242, the voice output of the first interpreter terminal voice input and output unit 262, and the voice output of a caller terminal voice telop memory 226. The voice input of the callee terminal voice input and output unit 242 is connected with a voice synthesis unit 244 which synthesizes the voice output of the caller terminal voice input and output unit 222, the voice output of the second interpreter terminal voice input and output unit 282, and the voice output of a callee terminal voice telop memory 246.

The voice input of the first interpreter terminal voice input and output unit 262 is connected with a voice synthesis unit 264 which synthesizes the voice output of the callee terminal voice input and output unit 242 and the voice output of a first interpreter terminal voice telop memory 266. The voice input of the second interpreter terminal voice input and output unit 282 is connected with a voice synthesis unit 284 which synthesizes the voice output of the caller terminal voice input and output unit 222 and the voice output of a second interpreter terminal voice telop memory 286.

Consequently, the voice of the first interpreter is transmitted only to the caller, and the voice of the second interpreter is transmitted only to the callee. This can prevent the speech of the caller from being interrupted by the voice of the second interpreter and the speech of the callee from being interrupted by the voice of the first interpreter, thereby allowing smooth conversation.

The caller terminal voice synthesis unit 224 has the function of suppressing the loudness level of the voice from the callee terminal when the voice from the first interpreter terminal is detected. The callee terminal voice synthesis unit 244 has the function of suppressing the loudness level of the voice from the caller terminal when the voice from the second interpreter terminal is detected. This can prevent the voices of the first and second interpreters from overlapping with the voices of the other parties in the caller terminal and the callee terminal, respectively, thereby avoiding poor audibility. The first and second interpreters can thus interpret the speeches of the speakers simultaneously to provide quick and precise interpretations.

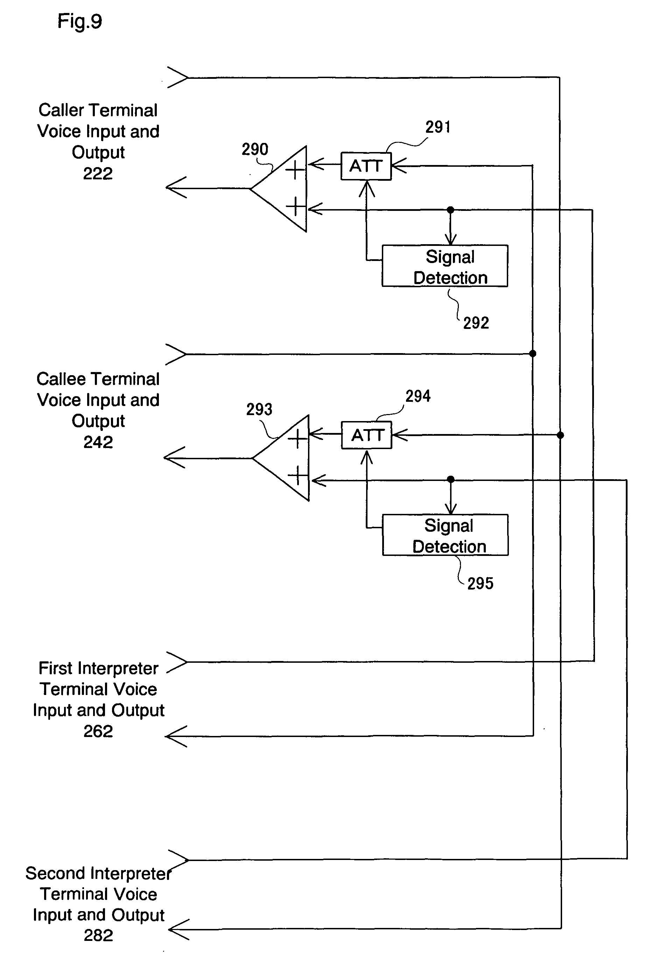

Fig. 9 shows a specific example of the functions of suppressing the callee voice or caller voice in the voice synthesis units 224 and 244. As shown in the diagram, the voice output of the first interpreter terminal voice input and output unit 262 is connected to a caller terminal voice signal adder 290. The voice output of the second interpreter terminal voice input and output unit 282 is connected to a callee terminal voice signal adder 293. This precludes the caller and the caller from receiving unnecessary voices of the second interpreter and the first interpreter, respectively.

The caller terminal voice signal adder 290 is also connected with the voice output of the callee terminal voice input and output unit 242 via an attenuator 291. The attenuator 291 attenuates the voice from the callee terminal when the voice of the first interpreter is detected by a signal detector 292. The callee terminal voice signal adder 293 is also connected with the voice output of the caller terminal voice input and output unit 222 via an attenuator 294. The attenuator 294 attenuates the voice from the caller terminal when the voice of the second interpreter is detected by a signal detector 295. Here, the signal detectors 292 and 295 are set to appropriate detection levels so as to prevent the voices of the other parties from accidental attenuation due to noise or the like.

Incidentally, appropriate signal delay units may be arranged on the interpreters' voice inputs to the voice signal adders 290 and 292. This can make sure that the caller and callee hear the voices of the interpreters immediately after the voices of the interpreters are detected by the signal detectors 293 and 295.

In the foregoing example, the voices of the other parties are attenuated by the attenuators 291 and 294 so that the caller or callee hears the live voice of the other party at some audible level when listening to the voice of the first or second interpreter. Nevertheless, the voices of the other parties may be shut off completely by using switches.

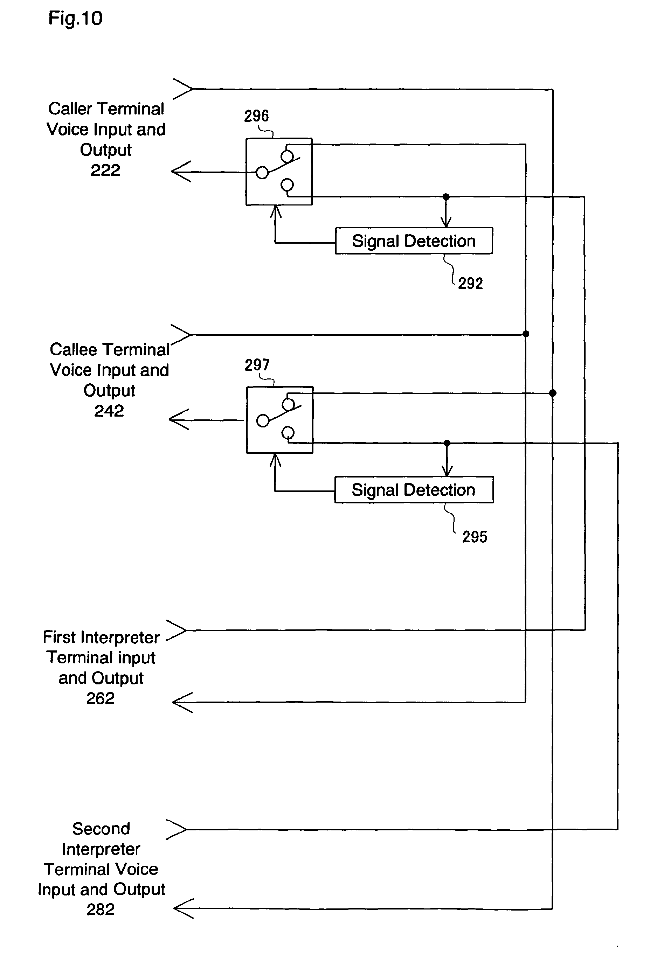

Fig. 10 shows a practical example in which the voices of the other parties are shut off and the voices of the interpreters alone are transmitted when the voices of the interpreters are detected. As shown in the diagram, switches 296 and 297 are used instead of the voice signal adders 290 and 293 described above. When the voices of the interpreters are detected by the signal detectors 292 and 295, the switches 296 and 297 are turned from the voices of the other parties to the voices of the interpreters. In other respects, the configuration is the same as in Fig. 9.

Incidentally, appropriate signal delay units may be arranged on the interpreters' voice inputs to the switches 296 and 292 so as to make sure that the caller and callee hear the voices of the interpreters immediately after the voices of the interpreters are detected by the signal detectors 292 and 295.

The foregoing example has dealt with the case where the voice signal adders 290 and 293 each add the voice of the interpreter and the voice of the other party simply. Nevertheless, the two signals may be multiplexed. For example, if the terminals are stereo-sound compatible, the voice of the other party and the voice of the interpreter are stereophonically synthesized and transmitted as the left channel and the right channel, respectively. Necessary voices are then selected by the receiving parties on the terminal sides. In this case, the telephone interpretation system need not be provided with the attenuators for attenuating the voices of the other parties. The receiving parties can adjust the loudness levels of the right and left channels across the headsets separately depending on the circumstances.

The foregoing embodiment has dealt with the case where the first interpreter listens only to and interprets the voice of the callee, and the second interpreter listens only to and interprets the voice of the caller. Nevertheless, the voice of the caller and the voice of the second interpreter may be attenuated and added to the voice to be transmitted to the first interpreter, or multiplexed into the same, for transmission. The voice of the callee and the voice of the first interpreter may be attenuated and added to the voice to be transmitted to the second interpreter, or multiplexed into the same, for transmission. In this case, the interpreters can conduct interpretation while checking the progress of the entire conversation and reactions of the other parties of interpretation.

The telephone interpretation system 200 includes a control unit 210 having an interpreter registration table 112 into which the terminal numbers of interpreter terminals to be used by interpreters are registered. The control unit 210 is connected with each of the line I/Fs 220, 240, 260, and 280, the voice input and output units 222, 242, 262, and 282, the voice synthesis units 224, 244, 264, and 284, and the telop memories 226, 246, 266, and 286. The control unit 210 provides functions for connecting the caller terminal, the callee terminal, the first interpreter terminal, and the second interpreter terminal. The functions include: accepting a call from the caller terminal; acquiring the language type of the caller and the language type of the callee; acquiring an interpreter selection condition; retrieving the terminal numbers of the first and second interpreters by referencing the interpreter registration table 212 based on the language types and the selection condition acquired; calling the first interpreter terminal and the second interpreter terminal by using the terminal numbers retrieved; acquiring the terminal number of the callee from the caller terminal; and calling the callee terminal by using the terminal number acquired.

The inputs of the voice synthesis units 224, 244, 264, and 284 are connected with the caller terminal voice telop memory 226, the callee terminal voice telop memory 246, the first interpreter terminal voice telop memory 266, and the second interpreter terminal voice telop memory 286, respectively. The contents of the voice telop memories 226, 246, 266, and 286 can be set by the control unit 210. Consequently, when holding a telephone conversation through interpreters, it is possible to output necessary voice messages to the individual terminals and establish a four-party call by setting the voice telop memories 226, 246, 266, and 286 with messages for the respective terminals, and issuing commands to select the signals of the voice telop memories 226, 246, 266, and 286 to the respective voice synthesis units 224, 244, 264, and 284.

Next, description will be given of the connection processing by the control unit 210 for holding a telephone conversation with bidirectional simultaneous interpretation.

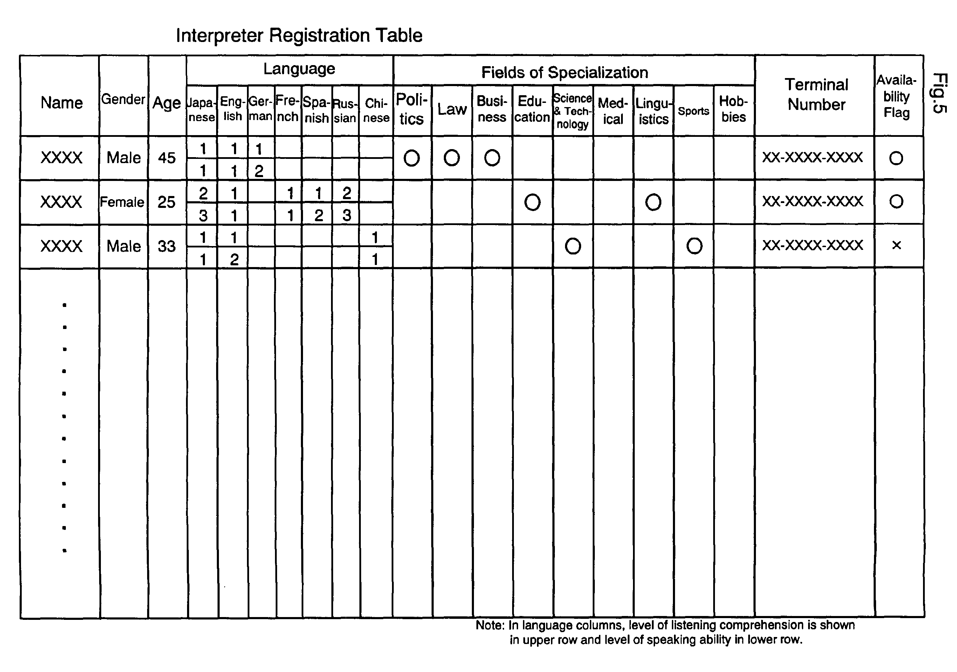

Again, the interpreter selection information and the terminal numbers of terminals to be used by the respective interpreters are registered into the interpreter registration table 212 of the control unit 210 from an appropriate terminal (not shown) before the processing. Fig. 5 shows examples of entry items to be registered into the interpreter registration table 212. As shown in the chart, the entry items to be registered into the interpreter registration table 212 are equivalent to those of the interpreter registration table 112 shown in Fig. 2. For language capabilities, however, the levels of listening comprehension and the levels of speaking abilities are registered separately. Consequently, interpreters the most suitable for the first interpreter who interprets the language of the callee into the language of the caller and the second interpreter who interprets the language of the caller into the language of the callee can be selected individually.

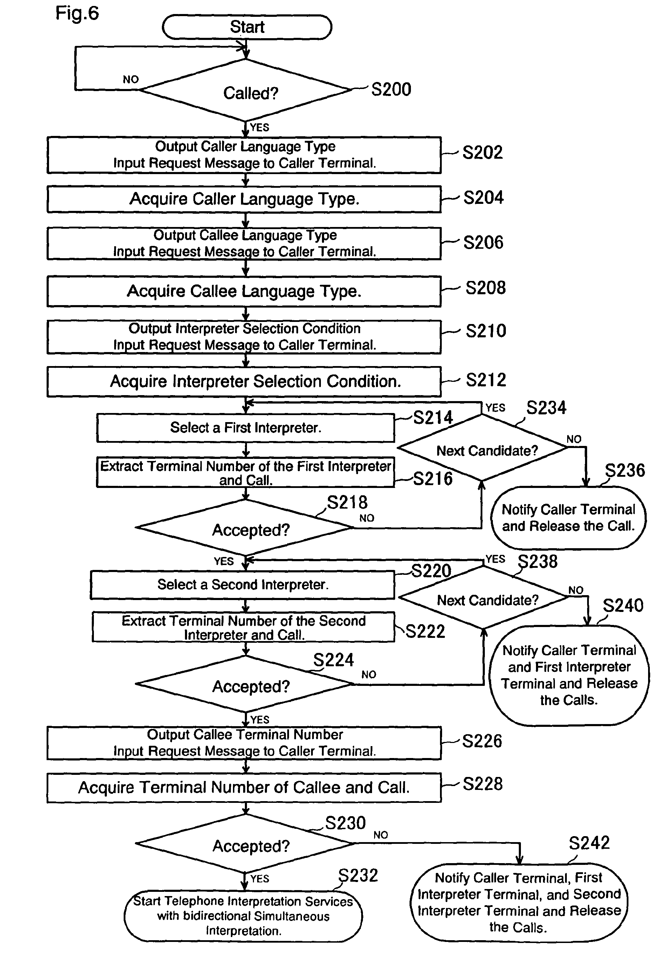

Fig. 6 shows the process flow of the connection processing by the control unit 210. The telephone interpretation system 200 accepts an order for interpretation services when the caller calls the telephone number of the caller terminal line I/F. The telephone interpretation system 200 then calls a first interpreter terminal, a second interpreter terminal, and a callee terminal, and establishes connection for the bidirectional simultaneous telephone interpretation services.

As shown in the chart, the presence of a call to the caller terminal line I/F 220 is detected initially (S200). When a call is detected, a message for requesting to input the language type of the caller is output to the caller terminal (S202) as in the first embodiment. The language type of the caller, input by the caller in response, is acquired thus (S204). Next, a message for requesting to input the language type of the callee is output to the caller terminal by using the acquired language type of the caller (S206) as in the first embodiment. The language type of the callee, input by the caller in response, is acquired thus (S208). Next, a message for requesting to input an interpreter selection condition is output to the caller terminal (S210) as in the first embodiment. The interpreter selection condition input by the caller in response is acquired thus (S212).

Next, the interpreter registration table 212 is referred to select a first interpreter (S214). Here, the first interpreter shall have the specified interpretation levels, or a level of listening comprehension in the language of the callee and a level of speaking ability in the language of the caller, match with the acquired selection condition including gender, age, residence, and the fields of specialization, and have his/her availability flag set. The terminal number of the selected interpreter is extracted and called (S216).

When the first interpreter terminal has accepted the call (S218), the interpreter registration table 212 is referred to select a second interpreter (S220). The second interpreter shall have the specified interpretation levels, or a level of listening comprehension in the language of the caller and a level of speaking ability in the language of the callee, match with the acquired selection condition including gender, age, residence, and the fields of specialization, and have his/her availability flag set. The terminal number of the selected interpreter is extracted and called (S222). When the second interpreter terminal has accepted the call (S224), a message for requesting to input the terminal number of the callee is output to the caller terminal (S226) as in the first embodiment. The terminal number of the callee, input by the caller in response, is thus acquired and called (S228).

When the callee terminal has accepted the call (S230), the telephone interpretation services with bidirectional simultaneous interpretation are started (S232).

In case the first interpreter terminal does not accept the call in S118, whether a next candidate is available is dermined (S234). In case a next candidate is available, the processing returns to S214 to repeat. Otherwise the caller terminal is notified as such and the call is released (S236). In case the second interpreter terminal does not accept the call in S224, whether a next candidate is available is determined (S238). In case a next candidate is available, the processing returns to S220 to repeat. Otherwise the caller terminal and the first interpreter terminal are notified as such and the calls are released (S240). In case the callee terminal does not accept in S230, the caller terminal, the first interpreter terminal, and the second interpreter terminal are notified as such and the calls are released (S242).

For the sake of simplicity, the selection of the first interpreter (S214) and the selection of the second interpreter (S220) have been described for situations where the interpreter registration table 212 is referred to select interpreters who match with the predetermined condition. Nevertheless, as in the first embodiment, the registered information on the appropriate interpreters may be notified via voice messages so that the caller makes final selections on both the first and second interpreters.

The control unit 210 has a timer (not shown) for calculating the fee for interpretation services. The timer measures the time from the beginning of a connection to the disconnection. The interpreter registration table 212 contains entries on the hourly rates of the interpreters (not shown). At the end of interpretation services, the fee is calculated from the time measured by the timer and the hourly rates of the first and second interpreters registered in the interpreter registration table 212. The calculated fee is registered into an accounting database 214, and charged to the user later.

Incidentally, the hourly rates of the interpreters may be determined from the interpretation levels registered in the interpreter registration table 212, by referencing an accounting table provided separately. Here, the accounting table shall define the relationship between the interpretation levels of the interpreters and the hourly rates.

The foregoing embodiment has dealt with the case where if the selected interpreter terminals do not accept the call, an appropriate message is simply posted to the caller before disconnection. Nevertheless, an interpretation reservation table for registering the terminal number of the caller and the terminal number of the callee may be provided so that the caller and the callee can be notified to start the telephone interpretation service when both the selected first and second interpreters accept the call.

The foregoing embodiment has dealt with the case where the telephone interpretation system 200 is composed of the line I/Fs, the voice input and output units, the voice synthesis units, the control unit, and so on. Nevertheless, these components need not necessarily be configured as separate pieces of hardware. The functions of the units may be achieved in the form of software processing by using a computer.

The foregoing embodiment has dealt with the case where the first interpreter terminal 32 and the second interpreter terminal 34 are located outside the interpretation center as the caller terminal 10 and the callee terminal 20 are, and provide interpretation services when called from the interpretation center via the public telephone lines. However, the present invention is not limited thereto. It is understood that some or all of interpreter terminals may be installed in the interpretation center so that interpretation services are provided from the interpretation center.

Incidentally, in the foregoing embodiment, the interpreters can participate interpretation services from anywhere as long as they have terminals capable of connection with public telephone lines. The interpreters can thus make effective use of their unoccupied hours to provide interpretation services by using the availability flags mentioned above. This allows efficient and stable operation of interpretation services which often have difficulty in securing necessary personnel.

Finally, description will be given of a recording and reproducing function for recording voices during telephone interpretation services, and reproducing and transmitting the same by user requests.

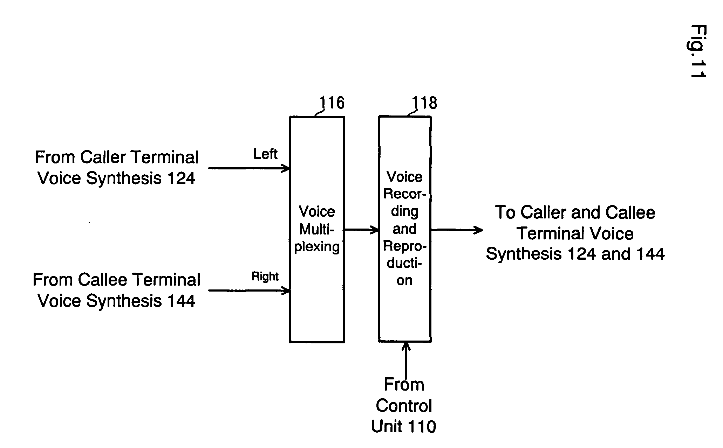

Fig. 11 shows a practical example of the recording and reproducing function in the telephone communication system according to the first embodiment. As shown in the diagram, the voice output of the voice synthesis unit 124 to be transmitted to the caller terminal and the voice output of the voice synthesis unit 144 to be transmitted to the callee terminal are multiplexed as the left channel and the right channel, respectively, by a voice multiplexing unit 116. The resultant is transmitted to a voice recording and reproducing unit 118.

During interpretation services, the voice output of the voice multiplexing unit 116 is automatically recorded by the voice recording and reproducing unit 118 at a command from the control unit 110, and is stored user by user. The voices stored in the voice recording and reproducing unit 118 are reproduced by a command from the control unit 110 when the voice input and output unit 122 or 142 detects that predetermined dial numbers are pressed from the caller terminal or the callee terminal. The reproduced voices are transmitted to each terminal via the voice synthesis unit 124 or 144 of the detected terminal.

Consequently, if the user terminals have a voice demultiplexing function, the voices of the respective terminals during interpretation services can be checked in the language of the caller on the left channel and in the language of the callee on the right channel. Incidentally, users can also reproduce and check the voices stored in the voice recording and reproducing unit 118 afterward by calling the interpretation center and inputting predetermined access code from their terminals.

Incidentally, the method of synthesizing the voices to be recorded into the voice recording and reproducing unit is not limited to the foregoing one. Any kind of method may be used as long as the users can check the details of the interpretation services. Since some user terminals do not have the voice demultiplexing function, the voices to be transmitted to the caller terminal and the voices to be transmitted to the callee terminal may be recorded separately. In this case, either one of the voices designated from a terminal can be reproduced for transmission.

The users may include persons other than those who have received the interpretation services. The images and voices stored in the voice recording and reproducing unit 118 may also be reproduced and transmitted when access-authorized persons call the interpretation center by using their telephone terminals and input predetermined access code.

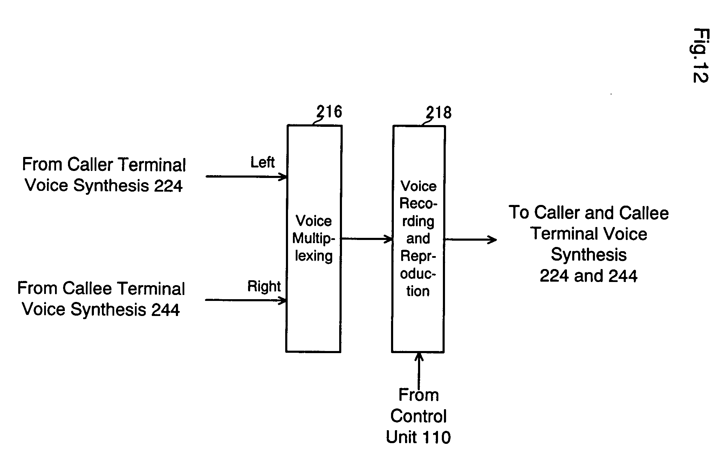

Fig. 12 shows a practical example of the recording and reproducing function in the telephone communication system with bidirectional simultaneous interpretation according to the second embodiment. As shown in the diagram, the voice output of the voice synthesis unit 224 to be transmitted to the caller terminal and the voice output of the voice synthesis unit 244 to be transmitted to the callee terminal are multiplexed as the left channel and the right channel, respectively, by a voice multiplexing unit 216. The resultant is transmitted to a voice recording and reproducing unit 218.

During interpretation services, the voice output of the voice multiplexing unit 216 is automatically recorded by the voice recording and reproducing unit 218 at a command from the control unit 210, and is stored user by user. The voices stored in the voice recording and reproducing unit 218 are reproduced by a command from the control unit 210 when the voice input and output unit 222 or 242 detects that predetermined dial numbers are pressed from the caller terminal or the callee terminal. The reproduced voices are transmitted to each terminal via the voice synthesis unit 224 or 244 of the detected terminal.

Consequently, if the user terminals have a voice demultiplexing function, the voices of the respective terminals during interpretation services can be checked in the language of the caller on the left channel and in the language of the callee on the right channel. Incidentally, users can also reproduce and check the voices stored in the voice recording and reproducing unit 218 afterward by calling the interpretation center and inputting predetermined access code from their terminals.

Incidentally, the method of synthesizing the voices to be recorded into the voice recording and reproducing unit is not limited to the foregoing one. Any kind of method may be used as long as the users can check the details of the interpretation services. Since some user terminals do not have the voice demultiplexing function, the voices to be transmitted to the caller terminal and the voices to be transmitted to the callee terminal may be recorded separately. In this case, either one of the voices designated from a terminal can be reproduced for transmission.

The users may include persons other than those who have received the interpretation services. The voices stored in the voice recording and reproducing unit 218 may also be reproduced and transmitted when access-authorized persons call the interpretation center by using their telephone terminals and input predetermined access code.

The foregoing embodiments have dealt with the cases where the caller terminal, the callee terminal, and the interpreter terminal(s) use ordinary telephone terminals to be connected to public telephone lines. Nevertheless, the present invention is not limited thereto. The present invention may also be applied to the cases where dedicated telephone terminals to be connected to dedicated lines are used, and where IP (Internet Protocol) type telephone terminals to be connected to Internet lines are used. Even in these cases, similar telephone interpretation systems or similar telephone interpretation methods can be achieved to provide the effects of the present invention.

Moreover, the present invention may be applied to the function of transmitting and receiving voices in interpretation services that use videophone sets having an image and voice communication function. In this case, the caller and the callee can see the images of the interpreters, and the interpreters can see the images of the caller and the callee. This facilitates grasping the details of the interpretation, allowing the provision of quicker and more precise interpretation services.

### INDUSTRIAL APPLICABILITY

As described above, according to the telephone interpretation system and the telephone interpretation method of the present invention, the speech of the speaker and the comprehension of the interpretation by the opponent party are not disturbed even when an interpreter performs simultaneous interpretation, while a caller or a callee is speaking is provided. This allows the effect of quick and precise interpretation.

## Claims

1. A telephone interpretation system for interpreting a call between a caller and a callee who speak different languages through an interpreter, the telephone interpretation system comprising:
connecting means for connecting a caller terminal, a callee terminal, and an interpreter terminal; and
communication means for conducting voice communications among the terminals connected by the connecting means,
wherein:
the communication means has a first voice transmission function of synthesizing a voice from the callee terminal and a voice from the interpreter terminal and transmitting the resultant to the caller terminal, a second voice transmission function of synthesizing a voice from the caller terminal and the voice from the interpreter terminal and transmitting the resultant to the callee terminal, and a third voice transmission function of synthesizing the voice from the caller terminal and the voice from the callee terminal and transmitting the resultant to the interpreter terminal;
the telephone interpretation system further has an unnecessary side voice suppressing function of suppressing an unnecessary voice, either the voice from the interpreter terminal to be supplied to the first voice transmission function or the voice from the interpreter terminal to be supplied to the second voice transmission function, by a command from the interpreter terminal;
the first voice transmission function has a callee voice suppressing function of suppressing the voice from the callee terminal when the voice from the interpreter terminal is detected; and
the second voice transmission function has a caller voice suppressing function of suppressing the voice from the caller terminal when the voice from the interpreter terminal is detected.

2. A telephone interpretation system for interpreting a call between a caller and a callee who speak different languages through an interpreter, the telephone interpretation system comprising:
connecting means for connecting a caller terminal, a callee terminal, and an interpreter terminal; and
communication means for conducting voice communications among the terminals connected by the connecting means,
wherein:
the communication means has a first voice transmission function of switching between a voice from the callee terminal and a voice from the interpreter terminal and transmitting the resultant to the caller terminal, a second voice transmission function of switching a voice from the caller terminal and the voice from the interpreter terminal and transmitting the resultant to the callee terminal, and a third voice transmission function of synthesizing the voice from the caller terminal and the voice from the callee terminal and transmitting the resultant to the interpreter terminal;
the telephone interpretation system further has an unnecessary side voice suppressing function of suppressing an unnecessary voice, either the voice from the interpreter terminal to be supplied to the first voice transmission function or the voice from the interpreter terminal to be supplied to the second voice transmission function, by a command from the interpreter terminal;
the first voice transmission function has a function of interrupting the voice from the callee terminal and transmitting the voice from the interpreter terminal when the voice from the interpreter terminal is detected; and
the second voice transmission function has a function of interrupting the voice from the caller terminal and transmitting the voice from the interpreter terminal when the voice from the interpreter terminal is detected.

3. A telephone interpretation system for interpreting a call between a caller and a callee who speak different languages through an interpreter, the telephone interpretation system comprising:
connecting means for connecting a caller terminal, a callee terminal, and an interpreter terminal; and
communication means for conducting voice communications among the terminals connected by the connecting means,
wherein:
the communication means has a first voice transmission function of multiplexing a voice from the callee terminal and a voice from the interpreter terminal and transmitting the resultant to the caller terminal, a second voice transmission function of multiplexing a voice from the caller terminal and the voice from the interpreter terminal and transmitting the resultant to the callee terminal, and a third voice transmission function of multiplexing the voice from the caller terminal and the voice from the callee terminal and transmitting the resultant to the interpreter terminal; and
the telephone interpretation system further has an unnecessary side voice suppressing function of suppressing an unnecessary voice, either the voice from the interpreter terminal to be supplied to the first voice transmission function or the voice from the interpreter terminal to be supplied to the second voice transmission function, by a command from the interpreter terminal.

4. The telephone interpretation system according to any one of claims 1 to 3, wherein
the communication means has a function of recording the voice from the caller terminal, the voice from the callee terminal, and the voice from the interpreter terminal; and a function of reproducing and transmitting the recorded voices by request from the terminals.

5. The telephone interpretation system according to any one of claims 1 to 4, wherein:
the connecting means has an interpreter registration table containing at least the language types possible for interpreters to interpret and terminal numbers of the interpreters; and
the telephone interpretation system has a function of accepting a call from the caller terminal; a function of acquiring a terminal number of the callee, the language type of the callee, and the language type of the caller from the caller terminal of which the call is accepted; a function of extracting the terminal number of an interpreter by referencing the interpreter registration table based on the language type of the callee and the language type of the caller acquired; a function of calling the interpreter terminal by using the acquired terminal number of the interpreter; and a function of calling the callee terminal by using the acquired terminal number of the callee.

6. A telephone interpretation system for interpreting a call between a caller and callee who speak different languages through a first interpreter who interprets the language of the callee into the language of the caller and a second interpreter who interprets the language of the caller into the language of the callee, the telephone interpretation system comprising:
connecting means for connecting a caller terminal, a callee terminal, a first interpreter terminal, and a second interpreter terminal; and
communication means for conducting voice communications among the terminals connected by the connecting means,
wherein:
the communication means has a first voice transmission function of synthesizing a voice from the callee terminal and a voice from the first interpreter terminal and transmitting the resultant to the caller terminal, a second voice transmission function of synthesizing a voice from the caller terminal and the voice from the second interpreter terminal and transmitting the resultant to the callee terminal, a third voice transmission function of transmitting at least the voice from the callee terminal to the first interpreter terminal, and a fourth voice transmission function of transmitting at least the voice from the caller terminal to the second interpreter terminal;
the first voice transmission function has a callee voice suppressing function of suppressing the voice from the callee terminal when the voice from the first interpreter terminal is detected; and
the second voice transmission function has a caller voice suppressing function of suppressing the voice from the caller terminal when the voice from the second interpreter terminal is detected.

7. A telephone interpretation system for interpreting a call between a caller and callee who speak different languages through a first interpreter who interprets the language of the callee into the language of the caller and a second interpreter who interprets the language of the caller into the language of the callee, the telephone interpretation system comprising:
connecting means for connecting a caller terminal, a callee terminal, a first interpreter terminal, and a second interpreter terminal; and
communication means for conducting voice communications among the terminals connected by the connecting means,
wherein:
the communication means has a first voice transmission function of switching between a voice from the callee terminal and a voice from the first interpreter terminal and transmitting the resultant to the caller terminal, a second voice transmission function of switching between a voice from the caller terminal and a voice from the second interpreter terminal and transmitting the resultant to the callee terminal, a third voice transmission function of transmitting at least the voice from the callee terminal to the first interpreter terminal, and a fourth voice transmission function of transmitting at least the voice from the caller terminal to the second interpreter terminal;
the first voice transmission function has a function of intercepting the voice from the callee terminal and transmitting the voice from the first interpreter terminal when the voice from the first interpreter terminal is detected; and
the second voice transmission function includes the function of intercepting the voice from the caller terminal and transmitting the voice from the second interpreter terminal when the voice from the second interpreter terminal is detected.

8. A telephone interpretation system for interpreting a call between a caller and callee who speak different languages through a first interpreter who interprets the language of the callee into the language of the caller and a second interpreter who interprets the language of the caller into the language of the callee, the telephone interpretation system comprising:
connecting means for connecting a caller terminal, a callee terminal, a first interpreter terminal, and a second interpreter terminal; and
communication means for conducting voice communications among the terminals connected by the connecting means,
wherein:
the communication means has a first voice transmission function of multiplexing a voice from the callee terminal and a voice from the first interpreter terminal and transmitting the resultant to the caller terminal, a second voice transmission function of multiplexing a voice from the caller terminal and a voice from the second interpreter terminal and transmitting the resultant to the callee terminal, a third voice transmission function of transmitting at least the voice from the callee terminal to the first interpreter terminal, and a fourth voice transmission function of transmitting at least the voice from the caller terminal to the second interpreter terminal.

9. The telephone interpretation system according to any one of claims 6 to 8, wherein
the communication means has a function of recording the voice from the caller terminal, the voice from the callee terminal, the voice from the first interpreter terminal, and the voice from the second interpreter terminal; and a function of reproducing and transmitting the recorded voices by request from the terminals.

10. The telephone interpretation system according to any one of claims 6 to 9, wherein:
the connecting means has an interpreter registration table containing at least the language types possible for interpreters to interpret and terminal numbers of the interpreters; and
the telephone interpretation system further has a function of accepting a call from the caller terminal; a function of acquiring a terminal number of the callee, the language type of the callee, and the language type of the caller from the caller terminal of which the call is accepted; a function of extracting the terminal number of the first interpreter by referencing the interpreter registration table based on the language type of the callee and the language type of the caller acquired; a function of calling the first interpreter terminal by using the acquired terminal number of the first interpreter; a function of extracting the terminal number of the second interpreter by referencing the interpreter registration table based on the language type of the caller and the language type of the callee acquired; a function of calling the second interpreter terminal by using the acquired terminal number of the second interpreter; and a function of calling the callee terminal by using the acquired terminal number of the callee.

11. The telephone interpretation system according to claim 5 or 10, wherein:
the interpreter registration table contains selection information for selecting interpreters; and
the connecting means has a function of acquiring an interpreter selection condition from the caller terminal; and a function of extracting the terminal number(s) of an appropriate interpreter(s) by referencing the interpreter registration table based on the interpreter selection condition acquired.

12. The telephone interpretation system according to any one of claims 5, 10, and 11, wherein:
the interpreter registration table contains availability flags for indicating whether or not the interpreters are available; and
the connecting means has a function of extracting the terminal number(s) of an available interpreter(s) by referencing the availability flags in the interpreter registration table.

13. The telephone interpretation system according to any one of claims 5, 10, 11, and 12, wherein:
the interpreter registration table contains accounting information on the interpreters; and
the connecting means has a function of measuring the time for the caller terminal or callee terminal to receive interpretation services, and a function of calculating fees from the measured time and the accounting information registered in the interpreter registration table.
